(19) Europäisches Patentamt
European Patent Office
Office européen des brevets

(11) **EP 2 372 874 B1**

(12) **FASCICULE DE BREVET EUROPEEN**

(45) Date de publication et mention
de la délivrance du brevet:
**13.10.2021 Bulletin 2021/41**

(51) Int Cl.:
*H02K 1/27* *(2006.01)*   *H02K 21/14* *(2006.01)*

(21) Numéro de dépôt: **11156933.1**

(22) Date de dépôt: **04.03.2011**

(54) **Machine électrique tournante synchrone à aimants permanents et concentration de flux**

Elektrische rotierende Synchronmaschine mit Dauermagneten und Strömungskonzentration

Synchronous rotating electric machine with permanent magnets and flux concentration

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **31.03.2010 FR 1052450**

(43) Date de publication de la demande:
**05.10.2011 Bulletin 2011/40**

(73) Titulaire: **Valeo Equipements Electriques Moteur
94046 Créteil Cedex (FR)**

(72) Inventeurs:
• **Legranger, Jérome
94000 Creteil (FR)**
• **Palleschi, Frédéric
94320 Thiais (FR)**

(56) Documents cités:
FR-A1- 2 784 816   JP-A- 2007 060 860
JP-A- 2007 195 393   US-A1- 2006 186 752

**EP 2 372 874 B1**

**Description**

La présente invention concerne une machine électrique tournante synchrone à aimants permanents et concentration de flux. Plus particulièrement, l'invention concerne une machine électrique tournante de ce type pour des applications comme générateur ou moteur électrique de traction dans des véhicules automobiles électriques et hybrides.

De par leurs performances accrues en termes de rendement et de puissance massique et volumique, les moteurs synchrones à aimants permanents trouvent aujourd'hui une large application dans le domaine de la traction dans les véhicules automobiles. De plus, la disponibilité d'aimants permanents aux terres rares à grande échelle et à des conditions économiques acceptables rend viable le choix de ces moteurs électriques pour les nouvelles générations de véhicules automobiles.

Ces moteurs électriques sont réalisables dans une large gamme de puissance et de vitesse et trouveront des applications aussi bien dans les véhicules tout électriques que dans les véhicules à bas $CO_2$ de types dits « mild-hybrid » et « full-hybrid » (en terminologie anglaise).

Les applications « mild-hybrid » concernent généralement des moteurs électriques de l'ordre de 8 à 10 KW, par exemple, un moteur électrique monté en face avant d'un moteur thermique et couplé à celui-ci par une courroie de transmission. Il est possible avec un tel moteur électrique de réduire la cylindrée de la motorisation thermique (« engine downsizing » en terminologie anglaise) en prévoyant une assistance électrique en couple qui fournit un appoint de puissance notamment lors des reprises. De plus, une traction à faible vitesse, par exemple en environnement urbain, peut également être assurée par ce même moteur électrique. Les applications de type « full-hybrid» concernent généralement des moteurs de 30 à 50 KW pour des architectures de type série et/ou parallèle avec un niveau d'intégration plus abouti du ou des moteurs électriques dans la chaîne de traction du véhicule.

Parmi les différents moteurs synchrones à aimants permanents connus ceux du type à concentration de flux présentent un intérêt particulier du fait de leurs excellentes performances. Dans ces moteurs à concentration de flux, les aimants sont enterrés dans la masse magnétique du rotor et disposés selon une configuration sensiblement radiale.

Dans un véhicule automobile, un moteur électrique utilisé en traction sur l'ensemble des missions de circulation du véhicule est soumis à des régimes de charge et de vitesse variables. Dans une machine à concentration de flux, lorsque le rotor de la machine tourne à vitesse élevée, des efforts mécaniques important dûs à la force centrifuge s'excercent sur les aimants et peuvent conduire à une détérioration du rotor.

Il est donc souhaitable de proposer des machines électriques tournantes synchrones à aimants permanents et concentration de flux dans lesquelles des dispositions sont prévues afin d'éviter tout risque de dégradation mécanique du rotor consécutive à l'effet de la force centrifuge.

Un exemple d'art antérieur est le document JP 2007 195393 A. Selon un premier aspect, défini dans la revendication 1, la présente invention concerne une machine électrique tournante comprenant un stator muni de bobinages statoriques et un rotor, le rotor comprenant une pluralité de pôles Nord et pôles Sud alternés qui sont formés à partir d'aimants permanents disposés selon une configuration sensiblement radiale dite à concentration de flux, les aimants permanents étant logés dans des premiers évidements respectifs aménagés dans la masse magnétique du rotor, chacun des premiers évidements débouchant sur un entrefer de la machine au niveau de la circonférence extérieure du rotor par l'intermédiaire d'une encoche séparant un pôle magnétique par rapport à un pôle magnétique voisin consécutif et formant des premier et second becs qui sont en regard et destinés à retenir l'aimant permanent concerné dans son premier évidement en s'opposant à l'effet de la force centrifuge sur l'aimant permanent.

Conformément à l'invention, la face inférieure des becs présente un angle d'inclinaison $\alpha$ par rapport à une face supérieure de l'aimant permanent qui est compris entre $\alpha = 0,1°$ et $\alpha = 15°$.

Selon l'invention, il est prévu un renfort mécanique au moyen d'un arrondi de rayon R entre la face inférieure des becs et une face attenante, sensiblement radiale, formant paroi intérieure du premier évidement.

Selon une caractéristique particulière de l'invention, le rayon R a une valeur comprise entre 0,2 et 0,9 fois une profondeur des becs. Selon l'invention, le rayon R est compris entre R = 0,5 mm et R = 1,5 mm.

Selon encore une autre caractéristique particulière de l'invention, des chanfreins, ou équivalents tels que des arrondis, sont prévus sur la partie supérieure des aimants permanents.

Selon encore une autre caractéristique particulière de l'invention, une laminette est interposée entre la face supérieure de l'aimant permanent et la face inférieure des becs. De préférence, la laminette a une épaisseur d'au moins 0,1 mm.

Selon encore une autre caractéristique particulière de l'invention, la laminette est réalisée dans un matériau en plastique chargé ou un matériau en résine époxy chargée en fibres de verre.

Selon encore une autre caractéristique particulière de l'invention, la laminette est réalisée dans un matériau métallique amagnétique.

D'autres caractéristiques et avantages de l'invention ressortiront à la lecture de la description suivante de plusieurs formes de réalisation particulières, en référence aux figures ci-dessous, dans lesquelles :

- la Fig.1 montre, de manière simplifiée, la structure d'une forme de réalisation particulière d'une machine électrique tournante défluxable à aimants permanents et concentration de flux selon l'invention ;
- la Fig.2 montre les différents évidements réalisés dans la masse magnétique du rotor de la machine de la Fig.1 ;
- la Fig.3 montre une configuration de montage des aimants permanents, intégrant une laminette, au niveau de l'extrémité haute des aimants ;
- la Fig.4 montre un réseau de réluctances d'un circuit magnétique de défluxage pour un aimant permanent du rotor de la machine de la Fig.1 ;
- la Fig.5 est une courbe d'aimantation des aimants montrant le point de fonctionnement de ceux-ci à l'intersection de leur droite de charge ;
- les Figs.6a et 6b montrent respectivement des première et seconde réalisations d'une portion formant pont entre des masses magnétiques du rotor, de part et d'autre d'un évidement E3 ;
- les Figs.7 et 8 sont respectivement des courbes de couple et d'inertie en fonction d'une hauteur H de la portion formant pont des Figs.6a et 6b ; et
- les Figs.9 et 10 sont respectivement des courbes de couple de la machine et d'inertie du rotor en fonction d'une longueur L de la portion formant pont des Figs.6a et 6b.

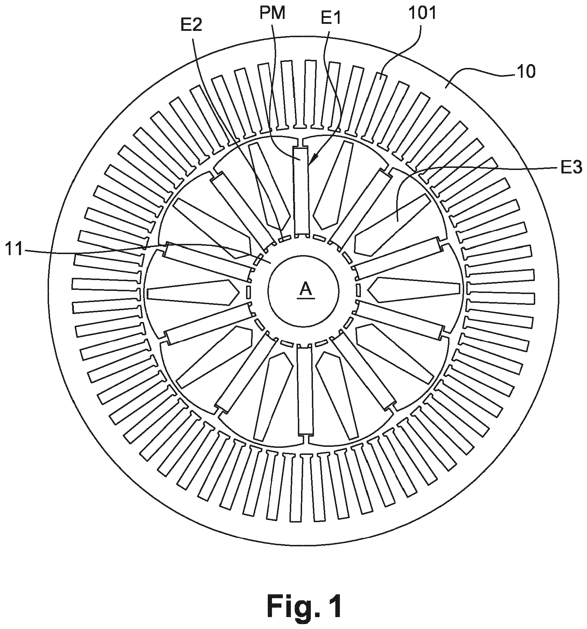

La Fig.1 montre la structure d'une forme de réalisation particulière 1 d'une machine électrique tournante défluxable selon l'invention. La machine 1 est de type à aimants enterrés et à concentration de flux et comprend un stator 10 et un rotor 11.

Une réalisation concrète d'une telle machine selon l'invention est par exemple un moteur de traction de 8 à 10 KW pour des applications dans des véhicules automobiles du type dits «mild-hybrid». Une forme de réalisation particulière de ce moteur comprend un stator 10 ayant 60 encoches 101 et un rotor 11 comportant 10 pôles Nord et Sud alternés. Le rotor 11 a un diamètre de l'ordre 100 mm et une longueur axiale de l'ordre de 50 mm. Le rotor 11 comporte 10 aimants permanents PM ayant une forme sensiblement rectangulaire et pour dimensions : longueur ($L_{zs}$) x hauteur ($h_a$) x largeur ($l_a$) = 50 mm x 25 mm x 5 mm.

Le stator 10 et le rotor 11 sont réalisés de manière classique avec des paquets de tôles métalliques formant des masses magnétiques.

Les encoches 101 du stator 10 sont prévues pour recevoir des bobinages statoriques (non représentés) et forment entre elles une pluralité de dents statoriques. Selon les formes de réalisation, les encoches 101 seront prévues pour loger des bobinages concentrés, bobinés sur des grosses dents, ou bien des bobinages distribués.

Le rotor 11 a la forme générale d'un cylindre multilobé, chacun des lobes correspondant à un pôle magnétique du rotor.

Les aimants PM sont disposés de manière radiale de façon à obtenir une structure de rotor de type à concentration de flux. Dans certaines formes de réalisation, les aimants PM pourront être légèrement désaxés par rapport au rayon du rotor 11. Les aimants PM sont de préférence des aimants permanents comprenant des terres rares tels que des aimants de type Néodyme-Fer-Bore (NeFeB), Samarium-Fer (SmFe), Samarium-Cobalt (SmCo) ou bien des aimants obtenus à partir de ferrites frittés ou liés.

Le rotor 10 comprend un alésage central débouchant à ses deux extrémités faciales et destiné à recevoir son arbre d'entraînement A. On notera que dans la présente invention l'arbre A pourra être réalisé dans un matériau magnétique ou amagnétique selon l'application envisagée.

Le rotor 10 comprend également des évidements E1, E2 et E3 qui se répètent pour chaque pôle et s'étendent axialement sur sensiblement toute la longueur du rotor.

Des tôles de fermeture, sans les évidements E1, E2 et E3, sont éventuellement prévues aux extrémités faciales du rotor 11 afin de contribuer à l'assemblage du rotor 11. Des points de soudure (non représentés) à la périphérie du paquet de tôles et des tirants traversants (non représentés), parallèles à l'axe central, sont également prévus pour l'assemblage du rotor 11. Les tirants traversants sont réalisés dans un matériau magnétique ou amagnétique, selon les applications. Avantageusement, le passage des tirants à travers le paquet de tôles du rotor 11 pourra se faire à travers les évidements E3.

Dans cette forme de réalisation particulière, les évidements E1, E2 et E3 sont chacun au nombre de 10, ce nombre correspondant au nombre N=10 de pôles magnétiques du rotor 11.

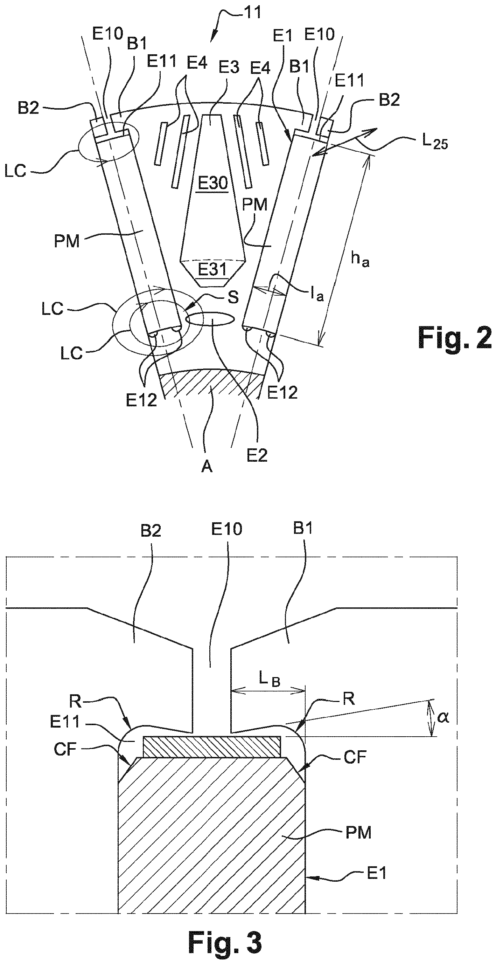

Les évidements E1, E2 et E3 sont maintenant décrits de manière détaillée en référence également aux Figs.2 et 3.

Les évidements E1 forment des logements quasi-rectangulaires pour les aimants permanents PM. Les évidements E1 ne sont pas occupés entièrement par les aimants PM et comportent des parties laissées vacantes qui remplissent des fonctions de réluctance et de barrière magnétique pour contrôler le passage du flux magnétique dans la masse magnétique du rotor 11 et les aimants PM.

L'évidement E1 débouche sur la circonférence extérieure du rotor 11 par l'intermédiaire d'une encoche E10. L'encoche E10 se prolonge axialement sur la longueur du rotor 11 et délimite ainsi le pôle par rapport au pôle voisin. Il est ainsi formé dans les pôles adjacents des premier et second becs B1, B2, qui sont en regard et destinés à retenir l'aimant permanent PM dans son logement, en s'opposant à l'effet de la force centrifuge sur l'aimant PM.

Un espace réluctant E11 est également prévu entre le bord haut de l'aimant PM et la face inférieure des becs B1, B2. Cet espace réluctant E11 est un espace de l'évidement E1 laissé vacant par l'aimant PM.

Il est montré à la Fig.3 des détails d'un montage de l'aimant permanent PM au niveau des becs B1 et B2. Ce montage de la Fig.3 correspond à une forme de réalisation particulière dans laquelle est prévue une laminette LM.

La laminette LM s'interpose entre la face supérieure de l'aimant PM et les faces inférieures des becs B1, B2. La laminette LM est par exemple réalisée en plastique chargé, dans une résine de type résine époxy chargée en fibres de verre, un matériau composite ou un matériau métallique amagnétique déformable. La laminette pour fonction de répartir les efforts mécaniques s'exerçant sur le haut de l'aimant PM et les becs B1, B2 et d'absorber par déformation un éventuel déplacement de l'aimant PM. Les essais effectués par l'entité inventive ont montrés que les forces centrifuges s'appliquant sur l'aimant PM peuvent être importantes. Dans le cas où la machine est soumise à une vitesse de rotation très élevée, l'aimant PM a tendance à s'éloigner de l'axe de rotation du rotor 11, sous l'effet de la force centrifuge, et une déformation des becs B1, B2 vers l'extérieur du rotor 11 pourrait survenir. La laminette LM contribue à une meilleure répartition des contraintes mécaniques entre les becs B1, B2 et en absorbant par déformation un éventuel déplacement de l'aimant PM réduit ainsi le risque d'une rupture de l'aimant PM et/ou d'une déformation des becs B1, B2. Les essais réalisés ont montrés qu'une épaisseur de laminette d'au moins 0,1 mm est souhaitable pour que celle-ci remplisse correctement sa fonction.

Conformément à l'invention, il est également prévu un angle d'inclinaison $\alpha$ de la face inférieure du bec B1, B2, par rapport à la face supérieure de l'aimant PM. Cette inclinaison pourra par exemple être obtenue au moyen d'un chanfrein qui a un angle compris entre $\alpha = 0,1°$ et $\alpha = 15°$. Selon l'invention, comme montré à la Fig.3, il est associé à ce chanfrein d'angle $\alpha$ un renfort mécanique obtenu au moyen d'un arrondi de rayon R. Cet arrondi est réalisé entre la face inférieure chanfreinée du bec B1, B2 et la face attenante, sensiblement radiale, formant paroi intérieure du logement d'aimant. Le rayon R aura de préférence une valeur comprise entre 0,2 et 0,9 fois la profondeur $L_B$ du bec B1, B2. Selon l'invention, le rayon R sera compris entre environ R = 0,5 mm et environ R = 1,5 mm. Comme cela apparaît à la Fig.3, des chanfreins ou équivalents (arrondis) CF sont prévus dans cette forme de réalisation sur la partie supérieure de l'aimant PM de manière à éviter un contact sur arête de l'aimant PM au niveau de l'arrondi de rayon R. On se référera uniquement à des chanfreins CF par la suite de la description et dans les revendications annexées, sachant que le terme « chanfrein » recouvre également les équivalents tels que des arrondis.

Les essais réalisés par l'entité inventive ont montré que pour la classe de machines auxquelles s'applique l'invention, un angle $\alpha$ et un rayon R dans les plages indiquées ci-dessus permettent d'obtenir des résultats satisfaisants en termes d'optimum de tenue aux forces centrifuges s'exerçant dans la gamme de vitesses allant de 0 à 20000 tours/mn.

La laminette LM autorise une distribution des efforts mécaniques sur les deux becs B1 et B2 et peut dans certains cas rendre inutile la nécessité de chanfreiner les bords des aimants PM lorsque son épaisseur est suffisante.

On notera que les réluctances magnétiques introduites par l'encoche E10 et l'espace réluctant E11, outre le fait de participer à la polarisation générale de l'aimant PM, décrite ultérieurement, s'opposent à une démagnétisation locale de l'aimant PM au niveau des arêtes.

Comme cela apparaît plus particulièrement à la Fig.2, l'évidement E1 comporte dans sa partie basse, au voisinage de l'arbre du rotor 11, des espaces réluctants E12 qui sont, dans cette forme de réalisation, des espaces remplis d'air, laissés vacants par l'aimant PM et qui en introduisent une réluctance magnétique empêchent des démagnétisations locales de l'aimant PM.

Les évidements E2 ont essentiellement une fonction de réluctance et de barrière magnétique pour contrôler un flux magnétique de défluxage à travers la partie centrale du rotor, c'est-à-dire, dans la masse magnétique entre le bas des aimants PM et l'arbre A du rotor. On notera que ces évidements E2 sont remplis d'air dans cette forme de réalisation particulière. Dans certaines applications, ils pourront être remplis avec des matériaux amagnétiques ou magnétiques avec une faible perméabilité relative.

Les évidements E3 remplissent plusieurs fonctions. De manière générale, ils ont essentiellement pour fonction de contribuer, comme les évidements E2, au contrôle du flux magnétique de défluxage, à travers la partie centrale du rotor, et de réduire l'inertie du rotor 11. Dans cette forme de réalisation, comme les encoches E10, les espaces réluctants E11, E12 et les évidements E2, ces évidements E3 sont remplis d'air. Dans certaines applications, ils pourront aussi être remplis avec des matériaux amagnétiques, voire magnétiques mais avec une faible densité.

Bien que les évidements E3 soient représentés ici comme étant aménagés radialement dans le rotor 11, centrés entre les aimants PM consécutifs et de forme symétrique, on notera que dans d'autres formes de réalisation de l'invention, les évidements E3 peuvent, notamment dans leur partie haute, n'être ni centrés ni de forme symétrique.

Comme montré notamment à la Fig.2, d'autres évidements, repérés E4, sont aménagés dans chaque pôle, de part et d'autre de l'évidement E3. Les évidements E4 contribuent à réduire l'inertie du rotor 11 et sont situés dans l'alignement des lignes de champ, entre celles-ci, de manière à s'opposer le moins possible au passage du flux magnétique des aimants PM. Dans cette forme de réalisation, les évidements E4 sont au nombre de deux de chaque côté de l'évidement E3. De manière générale, le nombre des évidements E4 pourra varier selon l'application et la place disponible. Par exemple, leur nombre pourra varier de 1 à 8, bien que 2 à 3 pour la présente invention soit un bon compromis.

Par ailleurs, on notera que les règles pratiques de découpe des tôles imposent de garder une largeur de matière comprise selon les cas entre 1 et 2 fois l'épaisseur de la tôle. En d'autres termes, cela signifie, par exemple, qu'entre deux évidements voisins du rotor ou entre un évidement et une circonférence extérieure du rotor, il doit au moins rester une largeur de matière comprise entre 1 et 2 fois l'épaisseur de la tôle. Ainsi, par exemple, pour une tôle de 0,35 mm d'épaisseur, la largeur minimale de matière à conserver sera comprise entre 0,35 mm et 0,7 mm.

Dans cette forme de réalisation, l'évidement E3 comporte un trapèze supérieur E30 et une partie basse E31. De manière générale, le trapèze supérieur E30 permet de réduire l'inertie du rotor 11. Il a cependant un effet sur la réaction magnétique d'induit et peut aussi être dimensionné de manière à participer au contrôle de celle-ci. La partie basse E31 est la partie de l'évidement E3 qui participe au contrôle du flux magnétique de défluxage à travers la partie centrale du rotor 11. La partie E31, conjointement avec les espaces réluctants E12 et l'évidement E2, permet de contrôler le trajet des lignes de champ magnétique dans la partie centrale du rotor 11.

Conformément à l'invention, la définition des évidements E31 et E2 à partir de l'étude de la répartition des lignes de champ magnétique dans le pôle permet d'obtenir un circuit magnétique de défluxage dimensionné de manière optimale. Ce circuit magnétique de défluxage doit être dimensionné de manière à permettre un passage du flux magnétique contournant l'aimant PM lorsque apparaît une situation de court-circuit dans les bobinages statoriques, ou bien lorsque en haute vitesse un courant égal au maximum au courant de court-circuit est injecté dans les bobinages statoriques de manière à s'opposer au flux magnétique généré par les aimants permanents.

Un tel circuit magnétique de défluxage empêche l'apparition dans l'aimant PM d'un champ démagnétisant avec une amplitude trop élevée, susceptible d'entraîner une démagnétisation irréversible de l'aimant PM. Le circuit magnétique de défluxage doit ainsi être calculé de manière à obtenir une polarisation correcte de l'aimant PM.

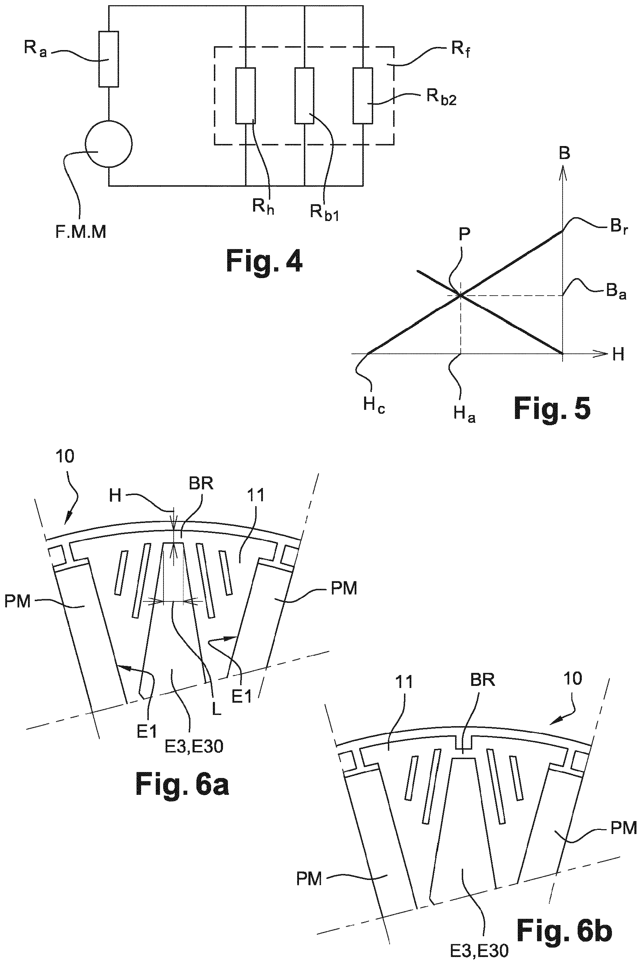

Le circuit magnétique équivalent autour d'un aimant permanent PM, en situation de court-circuit dans les bobinages statoriques, est représenté à la Fig.4.

En situation de court-circuit dans les bobinages statoriques, les lignes de champ LC (montrées à la Fig.2) de l'aimant PM ne passent pas par le stator de la machine. Ces lignes de champ LC se referment alors à travers une réluctance magnétique haute Rh et des réluctances magnétiques basses Rb1 et Rb2 du circuit magnétique formé autour de l'aimant PM.

La réluctance magnétique haute Rh est celle du trajet des lignes de champ LC à travers les becs B1, B2 et l'encoche E10. La réluctance magnétique basse Rb1 est celle du trajet des lignes de champ LC à travers les évidements E2 de part et d'autre du bas de l'aimant PM, dans les deux pôles adjacents. La réluctance magnétique basse Rb2 est celle des trajets des lignes de champ LC à travers les étranglements ferreux S des deux pôles, entre les évidements E2 et les bords en regard des évidements E1.

Les étranglements formés par les portions B1, B2 et S fonctionnent globalement dans un mode de saturation.

Comme montré à la Fig.4, le circuit magnétique comprend la source FMM en série avec la réluctance interne $R_a$ et une réluctance magnétique de circuit de défluxage $R_f$ sensiblement équivalente aux trois réluctances Rh, Rb1 et Rb2 en parallèle.

En référence également à la Fig.5, il est maintenant décrit le fonctionnement de l'aimant permanent PM en régime de court-circuit.

Pour les aimants permanents modernes, par exemple de type NdFeB, la courbe d'aimantation a sensiblement la forme d'une droite telle que montrée à la Fig.5. Cette droite est représentée par l'égalité :

$$B_a = \mu_a.H_a + B_r \qquad\qquad (1)$$

dans laquelle, $B_a$ est l'induction magnétique de l'aimant PM, $H_a$ est le champ magnétique appliqué à PM, $B_r$ est l'induction magnétique rémanente de PM et $\mu_a$ est la perméabilité magnétique de PM.

Les essais effectués par l'entité inventive ont montrés que pour éviter une désaimantation irréversible de l'aimant PM, il est souhaitable d'avoir un point de fonctionnement P satisfaisant à l'égalité :

$$B_a = B_r/\lambda \qquad\qquad (2)$$

avec $\lambda$ compris entre une valeur minimum $\lambda_{min}$ et une valeur maximum $\lambda_{max}$, qui, pour des aimants PM de type NdFeB, ont été déterminées égales à :

$\lambda_{min} = 1,7$ et
$\lambda_{max} = 2,5$

De manière plus générale, selon le type d'aimant, $\lambda$ pourra être compris entre 1,3 et 4.

La valeur voisine de $\lambda = 2$ apparaît comme étant un bon compromis en situation de court-circuit pour un aimant PM.

Pour simplifier, on considère ici que la perméabilité $\mu_a$ de l'aimant PM est sensiblement égale à la perméabilité absolue $\mu_o = 4.\pi.10^{-7}$ H/m.

La réluctance d'un aimant rectangulaire tel que l'aimant PM est donnée approximativement par la formule :

$$R_a = I_a / (\mu_o.h_a.L_{zs}) \qquad (3)$$

dans laquelle, comme montré à la Fig.2, $I_a$ est la largeur de l'aimant PM, $h_a$ est la hauteur de PM et $L_{zs}$ est la longueur de PM.

Le champ coercitif $H_c$ produisant une désaimantation définitive de l'aimant PM est donné en première approximation par :

$$H_c = B_r / \mu_a \qquad (4)$$

Le flux magnétique $\phi_a$ généré par l'aimant PM est donné par le produit de l'induction magnétique et de la surface, soit:

$$\phi_a = B_a.L_{zs}.h_a \qquad (5)$$

Le flux magnétique $\phi_a$ est également donné par la relation :

$$\phi_a = FMM / (R_a+R_f) \qquad (6)$$

La force magnétomotrice de l'aimant PM est donnée en première approximation par :

$$FMM = B_r.I_a / \mu_a \qquad (7)$$

A partir des égalités (5), (6) et (7), on obtient l'égalité :

$$B_a.L_{zs}.h_a = (B_r.I_a/\mu_a)/(R_a+R_f) \qquad (8)$$

Il découle de l'égalité (8) :

$$R_a+R_f = (I_a/(\mu_a.L_{zs}.h_a)).(B_r/B_a) \qquad (9).$$

En introduisant les égalités (2) et (3) dans (9), on obtient :

$$R_a+R_f = R_a \lambda \qquad (10)$$

Il en découle la relation :

$$R_f/R_a = (\lambda-1) \qquad (11)$$

Sachant que $\lambda$ doit être compris entre $\lambda_{min}$ et $\lambda_{max}$, on obtient l'inégalité :

$$(\lambda_{min}-1) \leq R_f/R_a \leq (\lambda_{max}-1) \qquad (12)$$

Pour les aimants PM de type NdFeB, avec $\lambda_{min}$ = 1,7 et $\lambda_{max}$ = 2,5, on obtient l'inégalité :

$$0,7 \leq R_f/R_a \leq 1,5 \qquad\qquad (13)$$

De manière plus générale, selon le type d'aimant, on obtient l'inégalité :

$$0,3 \leq R_f/R_a \leq 3 \qquad\qquad (14)$$

De préférence, on choisira $R_f/R_a$ = 1 qui correspond à $\lambda$ = 2.

Conformément à l'invention, il est possible de déterminer des valeurs $\lambda_{min}$ et $\lambda_{max}$ pour chaque type d'aimant. Ensuite, connaissant la réluctance Ra des aimants PM choisis pour la machine, une réluctance de circuit de défluxage globale $R_f$ peut être déterminée à partir de l'inégalité (12). Une fois la valeur de la réluctance de circuit de défluxage globale $R_f$ déterminée, il est possible d'optimiser la répartition de celle-ci entre Rh, Rb1 et Rb2 de manière à obtenir les performances voulues.

En référence maintenant aux Figs.6 à 10, il est décrit ci-dessous l'optimisation d'une portion BR formant pont entre les masses magnétiques du rotor 11 de part et d'autre de l'évidement E3.

Les essais effectués par l'entité inventive ont montré que le dimensionnement de ce pont BR du paquet de tôles rotoriques est important pour, d'une part, réduire le moment d'inertie du rotor 11 et, d'autre part, pour être en mesure de garantir l'obtention du couple maximum voulu pour la machine.

Comme cela apparaît aux Figs.6a et 6b, montrant deux formes de réalisation différentes, le pont BR est défini dimensionnellement par sa hauteur H et par sa longueur L.

Un tel pont BR est nécessaire pour des raisons de tenue mécanique du rotor 11. Dans les formes de réalisation des Figs.6a et 6b, le pont BR est continu sur toute la longueur axiale du rotor 11, de sorte que l'évidement E3 ne débouche en aucun point de la surface circonférentielle du rotor 11. Dans la forme de réalisation de la Fig.6b, le pont BR est réalisé en retrait par rapport à la surface circonférentielle du rotor et un entrefer plus large est obtenu au niveau du pont BR entre le stator 10 et le rotor 11. Dans d'autres formes de réalisation de l'invention non représentées, le pont BR pourra être réalisé de manière discontinue en laissant déboucher l'évidement E3 sur l'extérieur, à la surface circonférentielle du rotor 11, par exemple, une tôle sur deux.

On notera que la forme de réalisation de la Fig.6b avec un pont BR en retrait et les formes de réalisation indiquées ci-dessus avec un pont BR discontinu peuvent être intéressantes dans certaines applications, pour réduire les pertes fer à travers une réduction des harmoniques dans la force magnétomotrice. Dans les formes de réalisation décrites ici, l'entrefer variable entre le rotor 11 et le stator 10, visible aux Figs.1, 6a et 6b, contribue également à une réduction des harmoniques et donc des pertes fer.

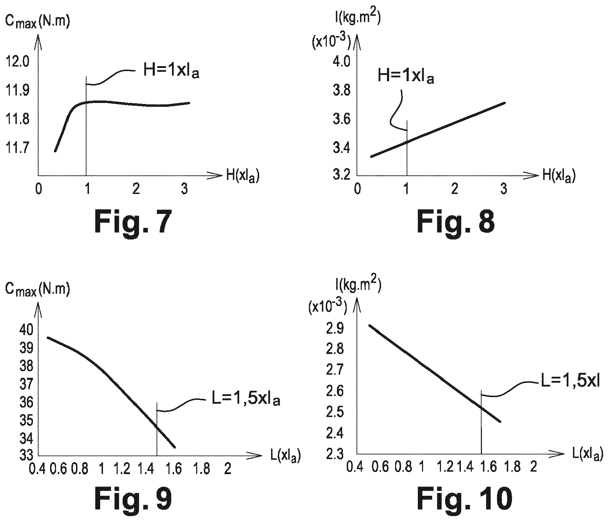

En référence aux Figs.7 et 8, les essais effectués par l'entité inventive montrent qu'un bon compromis entre un couple maximum (Cmax) et une inertie (I) minimale sera obtenu pour une hauteur H du pont BR qui doit rester inférieure à environ 1 fois la largeur $I_a$ ($1 \times I_a$) des aimants permanents PM.

Comme le montre la Fig.7, le couple Cmax est atteint pour une hauteur H de $1 \times I_a$. De plus, comme cela apparaît à la Fig.8, une hauteur H supérieure à $1 \times I_a$ aura seulement pour résultat d'accroître l'inertie I sans aucun gain au niveau du couple.

Sur un plan pratique, compte tenu des règles de découpe des tôles indiquées plus haut dans la description, la hauteur H du pont BR sera comprise entre environ 1 fois l'épaisseur de la tôle et environ 1 fois la largeur d'aimant $I_a$. Ainsi, par exemple, avec des tôles ayant une épaisseur de 0,35 mm et des aimants ayant une largeur de 5 mm, la hauteur du pont BR selon l'invention sera comprise ici entre environ 0,35 mm et environ 5 mm.

Les Figs.9 et 10 montrent des courbes de couple Cmax et d'inertie I en fonction de la longueur L du pont BR. Les essais réalisés par l'entité inventive montrent que le meilleur compromis de performances entre un couple maximum et une inertie minimale sera obtenu pour une longueur L du pont BR inférieure à environ 1,5 fois la largeur $I_a$ ($1 \times I_a$) des aimants permanents PM. Sur un plan pratique la longueur L minimale que pourra prendre le pont BR sera de l'ordre de 1,5 fois l'épaisseur de la tôle, soit de 0,520 mm environ pour une épaisseur de tôle de 0,35 mm.

L'invention a été décrite ici dans le cadre de formes de réalisation particulières. L'invention trouvera des applications importantes dans les moteurs électriques de traction utilisés dans l'automobile, pour les véhicules électriques et les véhicules hybrides. Cependant, il doit être clair que l'invention trouvera aussi des applications dans d'autres domaines que le domaine de l'automobile.

**Revendications**

1.  Machine électrique tournante comprenant un stator (10) muni de bobinages statoriques et un rotor (11), ledit rotor comprenant une pluralité de pôles Nord et pôles Sud alternés qui sont formés à partir d'aimants permanents (PM) disposés selon une configuration sensiblement radiale dite à concentration de flux, lesdits aimants permanents (PM) étant logés dans des premiers évidements (E1) respectifs aménagés dans la masse magnétique dudit rotor (11), **caractérisé en ce que** chacun desdits premiers évidements (E1) débouche sur un entrefer de la machine au niveau de la circonférence extérieure dudit rotor (11) par l'intermédiaire d'une encoche (E10) séparant un pôle magnétique par rapport à un pôle magnétique voisin consécutif et forme des premier et second becs (B1, B2) qui sont en regard et destinés à retenir ledit aimant permanent (PM) concerné dans son premier évidement (E1) en s'opposant à l'effet de la force centrifuge sur ledit aimant permanent (PM),

    une face inférieure desdits becs (B1, B2) présentant un angle d'inclinaison $\alpha$ par rapport à une face supérieure de l'aimant permanent (PM) qui est compris entre $\alpha = 0,1°$ et $\alpha = 15°$.
    étant prévu un renfort mécanique au moyen d'un arrondi de rayon R entre ladite face inférieure desdits becs (B1, B2) et une face attenante, sensiblement radiale, formant paroi intérieure dudit premier évidement (E1), ledit rayon R étant compris entre R = 0,5 mm et R = 1,5 mm.

2.  Machine électrique tournante selon la revendication 1, **caractérisée en ce que** ledit rayon R a une valeur comprise entre 0,2 et 0,9 fois une profondeur ($L_B$) des becs (B1, B2).

3.  Machine électrique tournante selon l'une quelconque des revendications 1 à 2, **caractérisée en ce que** des chanfreins (CF) sont prévus sur la partie supérieure desdits aimants permanents (PM).

4.  Machine électrique tournante selon l'une quelconque des revendications 1 à 3, **caractérisée en ce qu'**une laminette (LM) est interposée entre ladite face supérieure de l'aimant permanent (PM) et ladite face inférieure desdits becs (B1, B2).

5.  Machine électrique tournante selon la revendication 4, **caractérisée en ce que** ladite laminette (LM) a une épaisseur d'au moins 0,1 mm.

6.  Machine électrique tournante selon la revendication 5, **caractérisée en ce que** ladite laminette (LM) est réalisée dans un matériau en plastique chargé ou un matériau en résine époxy chargée en fibres de verre.

7.  Machine électrique tournante selon la revendication 5, **caractérisée en ce que** ladite laminette (LM) est réalisée dans un matériau métallique amagnétique.


**Patentansprüche**

1.  Drehende elektrische Maschine umfassend einen Stator (10) mit Statorwicklungen und einen Rotor (11), wobei der Rotor eine Mehrzahl abwechselnder Nord- und Südpole umfasst, die aus Dauermagneten (PM) gebildet sind, die gemäß einer im Wesentlichen radialen Flusskonzentrations-Ausgestaltung angeordnet sind, wobei die Dauermagneten (PM) in jeweiligen ersten Ausnehmungen (E1) untergebracht sind, die in der Magnetmasse des Rotors (11) angeordnet sind, **dadurch gekennzeichnet, dass** jede der ersten Ausnehmungen (E1) in einen Luftspalt der Maschine am Außenumfang des Rotors (11) über eine Rille (E10) mündet, die einen Magnetpol bezogen auf einen folgenden Nachbarmagnetpol trennt, und einen ersten und zweiten Vorsprung (B1, B2) bildet, die einander zugewandt und dazu bestimmt sind, den betreffenden Dauermagneten (PM) in seiner ersten Ausnehmung (E1) zu halten, indem sie der Wirkung der Zentrifugalkraft auf den Dauermagneten (PM) entgegenwirken,

    wobei eine Unterseite der Vorsprünge (B1, B2) einen Neigungswinkel $\alpha$ bezogen auf eine Oberseite des Dauermagneten (PM) aufweist, der zwischen $\alpha = 0,1°$ und $\alpha = 15°$ beträgt,
    wobei eine mechanische Verstärkung mittels einer Rundung mit Radius R zwischen der Unterseite der Vorsprünge (B1, B2) und einer im Wesentlichen radialen angrenzenden Seite, die eine Innenwand der ersten Ausnehmung (E1) bildet, vorgesehen ist, wobei der Radius R zwischen R = 0,5 mm und R = 1,5 mm beträgt.

2.  Drehende elektrische Maschine nach Anspruch 1, **dadurch gekennzeichnet, dass** der Radius R einen Wert zwischen dem 0,2- und 0,9-fachen einer Tiefe ($L_B$) der Vorsprünge (B1, B2) aufweist.

3. Drehende elektrische Maschine nach einem der Ansprüche 1 bis 2, **dadurch gekennzeichnet, dass** Abschrägungen (CF) auf dem oberen Abschnitt der Dauermagneten (PM) vorgesehen sind.

4. Drehende elektrische Maschine nach einem der Ansprüche 1 bis 3, **dadurch gekennzeichnet, dass** eine Folie (LM) zwischen der Oberseite des Dauermagneten (PM) und der Unterseite der Vorsprünge (B1, B2) eingefügt ist.

5. Drehende elektrische Maschine nach Anspruch 4, **dadurch gekennzeichnet, dass** die Folie (LM) eine Dicke von mindestens 0,1 mm aufweist.

6. Drehende elektrische Maschine nach Anspruch 5, **dadurch gekennzeichnet, dass** die Folie (LM) aus einem gefüllten Kunststoffmaterial oder einem Material aus glasfasergefülltem Epoxidharz hergestellt ist.

7. Drehende elektrische Maschine nach Anspruch 5, **dadurch gekennzeichnet, dass** die Folie (LM) aus einem nichtmagnetischen Metallmaterial hergestellt ist.


**Claims**

1. Rotating electrical machine comprising a stator (10) provided with stator windings and a rotor (11), said rotor comprising a plurality of alternated north poles and south poles which are formed from permanent magnets (PM) positioned according to a substantially radial, socalled flux concentration, configuration, said permanent magnets (PM) being housed in first respective recesses (E1) formed in the magnetic mass of said rotor (11), **characterized in that** each of said first recesses (E1) emerges on an air gap of the machine at the outer circumference of said rotor (11) via a notch (E10) separating one magnetic pole from a consecutive neighbouring magnetic pole and forms first and second tips (B1, B2) which are opposite and intended to retain said permanent magnet (PM) concerned in its first recess (E1) in opposing the effect of the centrifugal force on said permanent magnet (PM),

   a bottom face of said tips (B1, B2) exhibiting an angle of inclination $\alpha$ with respect to a top face of the permanent magnet (PM) which is between $\alpha = 0.1°$ and $\alpha = 15°$,
   a mechanical reinforcement being provided by means of a rounding of radius R between said bottom face of said tips (B1, B2) and a substantially radial adjoining face forming an internal wall of said first recess (E1), said radius R being between R = 0.5 mm and R = 1.5 mm.

2. Rotating electrical machine according to Claim 1, **characterized in that** said radius R has a value of between 0.2 and 0.9 times a depth ($L_B$) of the tips (B1, B2).

3. Rotating electrical machine according to either one of Claims 1 and 2, **characterized in that** chamfers (CF) are provided on the top part of said permanent magnets (PM).

4. Rotating electrical machine according to any one of Claims 1 to 3, **characterized in that** a platelet (LM) is interposed between said top face of the permanent magnet (PM) and said bottom face of said tips (B1, B2).

5. Rotating electrical machine according to Claim 4, **characterized in that** said platelet (LM) has a thickness of at least 0.1 mm.

6. Rotating electrical machine according to Claim 5, **characterized in that** said platelet (LM) is produced in a filled plastic material or a glass fibre-filled epoxy resin material.

7. Rotating electrical machine according to Claim 5, **characterized in that** said platelet (LM) is produced in a non-magnetic metallic material.

**Fig. 1**

Fig. 2

Fig. 3

**Fig. 4**

**Fig. 5**

**Fig. 6a**

**Fig. 6b**

$C_{max}$(N.m)

12.0
11.9
11.8
11.7

H=1x$I_a$

0    1    2    3    H(x$I_a$)

## Fig. 7

I(kg.m$^2$)
(x10$^{-3}$)

4.0
3.8
3.6
3.4
3.2

H=1x$I_a$

0    1    2    3    H(x$I_a$)

## Fig. 8

$C_{max}$(N.m)

40
39
38
37
36
35
34
33

L=1,5x$I_a$

0.4 0.6 0.8  1  1.2 1.4  1.6  1.8   2    L(x$I_a$)

## Fig. 9

I(kg.m$^2$)
(x10$^{-3}$)

2.9
2.8
2.7
2.6
2.5
2.4
2.3

L=1,5xl

0.4 0.6 0.8  1  1.2 1.4  1.6  1.8   2    L(x$I_a$)

## Fig. 10

**RÉFÉRENCES CITÉES DANS LA DESCRIPTION**

**Documents brevets cités dans la description**

- JP 2007195393 A